# EUROPEAN PATENT SPECIFICATION

(11) **EP 2 008 897 B1**
(45) Date of publication and mention of the grant of the patent: **26.09.2012**
(21) Application number: 08159028.3
(22) Date of filing: 25.06.2008
(51) Int. Cl.: B60T 13/16, B60T 7/04, B60T 7/10, B60T 8/34, B60T 8/40, B60T 11/10, B60T 17/22

(54) **Hydraulic by-wire vehicle braking system**
Mechatronisches Hydraulikbremssystem für ein Fahrzeug
Système de freinage de type 'freinage électronique' hydraulique

(30) Priority: 26.06.2007 US 768423
(43) Date of publication of application: 31.12.2008
(73) Proprietor: Deere & Company, Moline, IL 61265-8098 (US)
(72) Inventor: Schick, Troy E, Cedar Falls, IA 50613 (US); Wallestad, Steven D, Cedar Falls, IA 50613 (US); Herbst, Brian L, Cedar Falls, IA 50613 (US)
(74) Representative: Dehnhardt, Florian Christopher

(56) References cited:
- WO-A1-98/57835
- WO-A2-01/98122
- DE-A1- 19 616 538
- DE-A1-102004 023 007
- FR-A1- 2 523 063
- US-A- 5 222 787
- US-A1- 2005 110 338
- US-A1- 2006 087 173

## Description

The present invention relates to a hydraulic by-wire vehicle braking system.

Some vehicles, such as agricultural tractors, have braking systems, wherein the left and right brakes can be independently controlled to assist with steering the vehicle. Such braking systems must also have a redundant brake valve and oil supply to insure brake function in the event of a single valve or supply failure.

By-wire braking systems in vehicles eliminate the mechanical link between the brake pedals and the road wheels, and permit the system to achieve desirable control characteristics. It is desirable to have an economical and reliable by-wire braking system which permits independently control of left and right brakes, and which has redundancy.

In this context, from DE 10 2004 023 007 A1 a brake by-wire braking system for a vehicle is known. The by-wire braking system comprises multiple wheel brake units which are hydraulically operable by means of electric driven pumps being connected to a hydraulic reservoir. Each of the wheel brake units is connected to a downstream connected electrically actuable pressure relieve valve for controlling the pressure being applied to the appropriate wheel brake unit. An electrically actuable communication valve allows to alternatively operate the wheel brake units of a common axle independent from each other or to control them together. In case of a failure of the by-wire braking system, the wheel brake units are hydraulically operable by establishing a conventional hydraulic supply connection to a master brake cylinder of the vehicle.

A similar approach in case of a system failure is also described in US 2006/0087173 A1 and US 2005/0110338 A1.

Accordingly, an object of this invention is to provide a more cost effective by-wire vehicle braking system which permits independently control of left and right brakes, and which has redundant brake control valves.

These and other objects are achieved by the present invention, wherein a hydraulic by-wire braking system is provided. The braking system includes a hydraulic pump, a reservoir, and left and right pressure operated wheel brake units. A left brake line communicates with the left wheel brake unit, a right brake line communicates with the right wheel brake unit, and a left-right communication valve is operable to open and dose communication between the left and right brake lines. A left brake control valve controls communication between the pump, the reservoir and the left brake line, and a right brake control valve controls communication between the pump, the reservoir and the right brake line. A left-right communication or crossover valve is opened when one of the brake control valves fails, wherein both wheel brake units are controlled together by the remaining brake control valve.

Thus, the circuit includes redundant brake control valves to guarantee brake function in the event of a single valve failure. However, instead of using two valves for each side of an axle, a single valve is used on each side with a crossover valve which is opened when either the right or the left brake control valve fails. When the crossover valve is open, the brakes on both sides of the axle can be applied with either the right or left brake control valve. During a failure condition, the ability to use independent right and left brakes is disabled. In this manner, fewer valves can be used to achieve the redundancy required in a by-wire braking system.

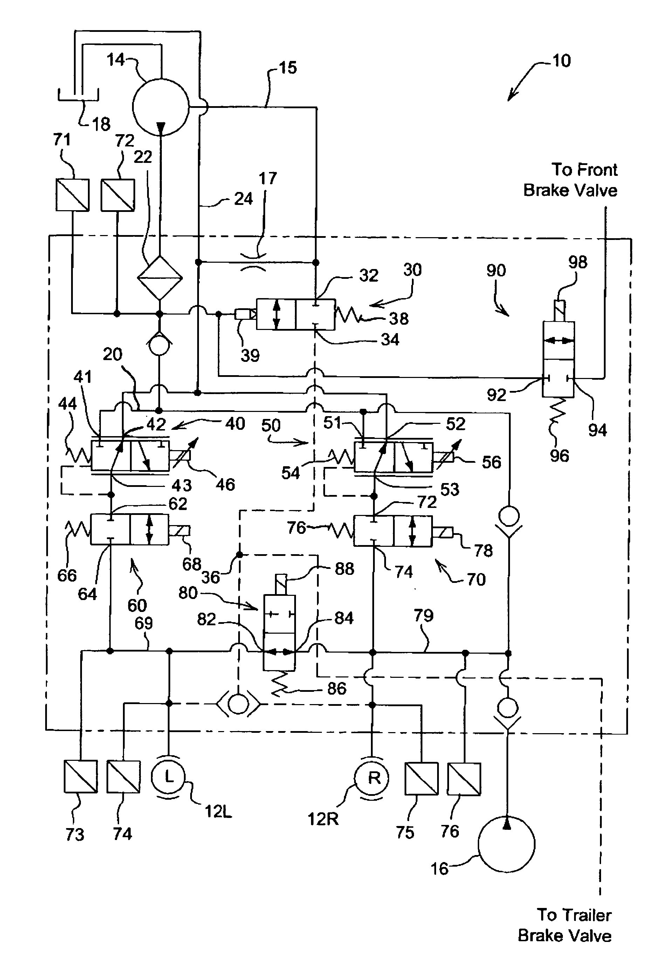

The sole Figure is a schematic diagram of a hydraulic by-wire braking system according to the present invention.

Referring to the Figure, a hydraulic by-wire braking system or circuit 10 includes a left wheel brake actuator or wheel brake unit 12L and a right wheel brake actuator or wheel brake unit 12R. System 10 also includes a main pump 14, a secondary pump 16 and a reservoir 18.

The outlet of main pump 14 is connected to supply line 20 via filter 22. Return line 24 is connected to reservoir 18.

The system 10 includes a load sense blocking valve 30, a left solenoid operated brake control valve 40, a right solenoid operated brake control valve 50, a left shut-off valve 60, a right shut-off valve 70, a left-right communication valve 80, and a front brake shut-off valve 90.

Load sense blocking valve 30 has a first port 32 connected to main pump 14 via load sense line 15 and connected to return line 24 via restriction 17. A second port 34 is connected to a load sense line 36 which is connected to left and right wheel brake actuators 12L and 12R and to a trailer brake valve (not shown). Load sense blocking valve 30 is urged to a closed position by spring 38 and to an open position by pressure responsive pilot 39. Pressure responsive pilot 39 is connected to supply line 20 downstream of filter 22 and to front brake shut-off valve 90.

Left brake control valve 40 has a first port 41 connected to supply line 20, a second port 42 connected to return line 24 and a third port 43 connected to left shut-off valve 60. Left brake control valve 40 is urged to a first position by spring 44 and to a second position by solenoid 46. In its first position first port 41 is closed and third port 43 is connected to second port 42. In its second position, first port 41 is connected to third port 43 and second port 42 is closed.

Right brake control valve 50 has a first port 51 connected to supply line 20, a second port 52 connected to return line 24 and a third port 53 connected to right shut-off valve 70. Right brake control valve 50 is urged to a first position by spring 54 and to a second position by solenoid 56. In its first position first port 51 is closed and third port 53 is connected to second port 52. In its second position, first port 51 is connected to third port 53 and second port 52 is closed.

Left shut-off valve 60 has a first port 62 connected to third port 43 of left brake control valve 40, and a second port 64 connected to left wheel brake actuator 12L via left brake line 69. Left shut-off valve 60 is urged to a first position by spring 66 and to a second position by solenoid 68. In its first position first and second ports 62 and 64 are closed. In its second position, first port 62 is connected to second port 64.

Right shut-off valve 70 has a first port 72 connected to third port 53 of right brake control valve 50, and a second port 74 connected to right wheel brake actuator 12R via right brake line 79. Right shut-off valve 70 is urged to a first position by spring 76 and to a second position by solenoid 78. In its first position first and second ports 72 and 74 are closed. In its second position, first port 72 is connected to second port 74.

Left-right communication or crossover valve 80 has a first port 82 connected to second port 64 of left shut-off valve 60 and to the left wheel brake actuator 12L, and a second port 84 connected to second port 74 of right shut-off valve 70 and to right wheel brake actuator 12R. Left-right communication valve 80 is urged to a first position by spring 86 and to a second position by solenoid 88. In its first position first port 82 is connected to second port 84. In its second position, first and second ports 82 and 84 are closed.

Secondary pump 16 has an outlet communicated to supply line 20 and to second ports 74 and 84, and to right brake line 79. The secondary pump 16 is preferably driven by an electric motor. The secondary pump 16 thus is connected to the first ports or inlets 41 and 51 of the left and right brake control valves 40 and 50 and to their third ports or outlets 43 and 53 via left and right shut-off valves 60 and 70.

Front brake shut-off valve 90 has a first port 92 connected to supply line 20, and a second port 94 connected to a front brake valve (not shown). Front brake shut-off valve 90 is urged to a first position by spring 96 and to a second position by solenoid 98. In its first position first and second ports 92 and 94 are closed. In its second position, first port 92 is connected to second port 94.

Pressure transducers 71-76 are connected to different places in the system 10, to supply pressure signals to an electronic control unit (not shown).

When left-right communication valve 80 blocks communication between first and second ports 82 and 84, the left and right wheel brake actuators 12L and 12R can be independently controlled by left and right brake control valves 40 and 50, respectively. When left-right communication valve 80 opens communication between first and second ports 82 and 84, the left and right wheel brake actuators 12L and 12R can be controlled together, either by left brake control valve 40 or by right brake control valve 50, thus providing redundancy. When left brake control valve 40 is controlling both left and right wheel brake actuators 12L and 12R, right shut-off valve 70 can be moved to its blocking position to isolate right brake control valve 50 from the left and right wheel brake actuators 12L and 12R. Similarly, when right brake control valve 50 is controlling both left and right wheel brake actuators 12L and 12R, left shut-off valve 60 can be moved to its blocking position to isolate left brake control valve 40 from the left and right wheel brake actuators 12L and 12R.

## Claims

1. A hydraulic by-wire vehicle braking system, comprising a hydraulic pump (14), a hydraulic reservoir (18), left and right pressure operated wheel brake units (12L, 12R), a left brake line (69) communicated with the left wheel brake unit (12L), a right brake line (79) communicated with the right wheel brake unit (12R); a left-right communication valve (80) operable to open and close communication between the left and right brake lines (69, 79), a left brake control valve (40) controlling communication between the pump (14), the reservoir (18) and the left brake line (69), and a right brake control valve (50) controlling communication between the pump (14), the reservoir (18) and the right brake line (79), **characterized in that** the left-right communication valve (80) is opened when one of the brake control valves (40, 50) fails, wherein both wheel brake units (12L, 12R) are controlled together by the remaining brake control valve (50, 40).

2. The braking system according to claim 1, **characterized by** a left shut-off valve (60) between an outlet of the left brake control valve (40) and the left brake line (69), and a right shut-off valve (70) between an outlet of the right brake control valve (50) and the right brake line (79).

3. The braking system according to claim 1, **characterized in that** each shut-off valve (60, 70) includes a spring (66, 76) which biases the shut-off valve (60, 70) to a position blocking communication between the corresponding brake control valve (40, 60) and brake line (69, 79), and each shut-off valve (60, 70) includes a solenoid (68, 78) which is operable to move the shut-off valve (60, 70) to a position opening communication between the corresponding brake control valve (40, 60) and brake line (69, 79).

4. The braking system according to claim 1, **characterized by** a secondary pump (16) supplying pressurized fluid to inlets of the brake control valves (40, 50).

5. The braking system according to claim 1, **characterized in that** each brake control valve (40, 50) includes a spring (44, 54) which biases the brake control valve (40, 50) to a position blocking communication between the pump (14) and the brake lines (69, 79), and each brake control valve (40, 50) includes a solenoid (46, 56) which is operable to move the brake control valve (40, 50) to a position opening communication between the pump (16) and the brake lines (69, 79).

6. The braking system according to claim 1, **characterized in that** the left-right communication valve (80) includes a spring (86) which biases the left-right communication valve (80) to a position opening communication between the brake lines (69, 79), and the left-right communication valve (80) includes a solenoid (88) which is operable to move the left-right communication valve (80) to a position closing communication between the brake lines (69, 79).

## Patentansprüche

1. Hydraulisches Brake-by-wire-Fahrzeugbremssystem, das eine Hydraulikpumpe (14), einen Hydraulikbehälter (18), eine linke und eine rechte druckbetätigte Radbremseinheit (12L, 12R), eine linke Bremsleitung (69), die mit der linken Radbremseinheit (12L) kommuniziert, eine rechte Bremsleitung (79), die mit der rechten Radbremseinheit (12R) kommuniziert; ein Links/Rechts-Kommunikationsventil (80), das betreibbar ist, um eine Kommunikation zwischen der linken und der rechten Bremsleitung (69, 79) zu ermöglichen und zu blockieren, ein linkes Bremssteuerventil (40), das die Kommunikation zwischen der Pumpe (14), dem Behälter (18) und der linken Bremsleitung (69) steuert, und ein rechtes Bremssteuerventil (50), das die Kommunikation zwischen der Pumpe (14), dem Behälter (18) und der rechten Bremsleitung (79) steuert, umfasst, **dadurch gekennzeichnet, dass** das Links/Rechts-Kommunikationsventil (80) geöffnet wird, wenn eines der Bremssteuerventile (40, 50) ausfällt, wobei beide Radbremseinheiten (12L; 12R) durch das verbleibende Bremssteuerventil (50, 40) gemeinsam gesteuert werden.

2. Bremssystem nach Anspruch 1, **gekennzeichnet durch** ein linkes Abschaltventil (60) zwischen einem Auslass des linken Bremssteuerventils (40) und der linken Bremsleitung (69) und ein rechtes Abschaltventil (70) zwischen einem Auslass des rechten Bremssteuerventils (50) und der rechten Bremsleitung (79).

3. Bremssystem nach Anspruch 1, **dadurch gekennzeichnet, dass** jedes Abschaltventil (60, 70) eine Feder (66, 76) enthält, die das Abschaltventil (60, 70) in eine Position vorbelastet, in der die Kommunikation zwischen dem entsprechenden Bremssteuerventil (40, 60) und der Bremsleitung (69, 79) blockiert ist, und jedes Abschaltventil (60, 70) ein Solenoid (68, 78) umfasst, das betreibbar ist, um das Abschaltventil (60, 70) in eine Position zu bewegen, in der die Kommunikation zwischen dem entsprechenden Bremssteuerventil (40, 60) und der Bremsleitung (69, 79) möglich ist.

4. Bremssystem nach Anspruch 1, **gekennzeichnet durch** eine sekundäre Pumpe (16), die mit Druck beaufschlagtes Fluid Einlässen der Bremssteuerventile (40, 50) zuführt.

5. Bremssystem nach Anspruch 1, **dadurch gekennzeichnet, dass** jedes Bremssteuerventil (40, 50) eine Feder (44, 54) enthält, das das Bremssteuerventil (40, 50) in eine Position vorbelastet, in der die Kommunikation zwischen der Pumpe (14) und den Bremsleitungen (69, 79) blockiert ist, und jedes Bremssteuerventil (40, 50) ein Solenoid (46, 56) enthält, das betreibbar ist, um das Bremssteuerventil (40, 50) in eine Position zu bewegen, in der die Kommunikation zwischen der Pumpe (16) und den Bremsleitungen (69, 79) möglich ist.

6. Bremssystem nach Anspruch 1, **dadurch gekennzeichnet, dass** das Links/Rechts-Kommunikationsventil (80) eine Feder (86) enthält, die das Links/Rechts-Kommunikationsventil (80) in eine Position vorbelastet, in der die Kommunikation zwischen den Bremsleitungen (69, 79) möglich ist, und das Links/Rechts-Kommunikationsventil (80) ein Solenoid (88) enthält, das betreibbar ist, um das Links/Rechts-Kommunikationsventil (80) in eine Position zu bewegen, in der die Kommunikation zwischen den Bremsleitungen (69, 79) blockiert ist.

## Revendications

1. Système de freinage hydraulique à commande électrique pour véhicule, comportant une pompe hydraulique (14), un réservoir hydraulique (18), des unités gauche et droite (12L, 12R) de freins de roues actionnées par pression, une canalisation (69) de frein gauche en communication avec l'unité gauche (12L) de frein de roue, une canalisation (79) de frein droit en communication avec l'unité droite (12R) de frein de roue ; une vanne (80) de communication gauche-droite utilisable pour ouvrir et fermer la communication entre les canalisations (69, 79) de freins gauche et droit, une vanne (40) de commande de frein gauche commandant la communication entre la pompe (14), le réservoir (18) et la canalisation (69) de frein gauche, et une vanne (50) de commande de frein droit commandant la communication entre la pompe (14), le réservoir (18) et la canalisation (79) de frein droit, **caractérisé en ce que** la vanne (80) de communication gauche-droite est ouverte lorsque l'une des vannes (40, 50) de commande de freins est défectueuse, les deux unités (12L, 12R) de freins de roues étant commandées ensemble par la vanne restante (40, 50) de commande de frein.

2. Système de freinage selon la revendication 1, **caractérisé par** une vanne (60) d'isolement gauche entre une sortie de la vanne (40) de commande de frein gauche et la canalisation (69) de frein gauche, et une vanne (70) d'isolement droite entre une sortie de la vanne (50) de commande de frein droit et la canalisation (79) de frein droit.

3. Système de freinage selon la revendication 1, **caractérisé en ce que** chaque vanne (60, 70) d'isolement comprend un ressort (66, 76) qui sollicite la vanne (60, 70) d'isolement vers une position bloquant la communication entre la vanne (40, 50) de commande de frein et la canalisation (69, 79) de frein correspondantes, et **en ce que** chaque vanne (60, 70) d'isolement comprend un solénoïde (68, 78) utilisable pour amener la vanne (60, 70) d'isolement dans une position ouvrant la communication entre la vanne (40, 50) de commande de frein et la canalisation (69, 79) de frein correspondantes.

4. Système de freinage selon la revendication 1, **caractérisé par** une pompe secondaire (16) fournissant du fluide sous pression à des entrées des vannes (40, 50) de commande de freins.

5. Système de freinage selon la revendication 1, **caractérisé en ce que** chaque vanne (40, 50) de commande de frein comprend un ressort (44, 54) qui sollicite la vanne (40, 50) de commande de frein vers une position bloquant la communication entre la pompe (14) et les canalisations (69, 79) de freins, et **en ce que** chaque vanne (40, 50) de commande de frein comprend un solénoïde (46, 56) utilisable pour amener la vanne (40, 50) de commande de frein dans une position ouvrant la communication entre la pompe (16) et les canalisations (69, 79) de freins.

6. Système de freinage selon la revendication 1, **caractérisé en ce que** la vanne (80) de communication gauche-droite comprend un ressort (86) qui sollicite la vanne (80) de communication gauche-droite vers une position ouvrant la communication entre les canalisations (69, 79) de freins, et **en ce que** la vanne (80) de communication gauche-droite comprend un solénoïde (88) utilisable pour amener la vanne (80) de communication gauche-droite dans une position fermant la communication entre les canalisations (69, 79) de freins.
